# EUROPÄISCHE PATENTSCHRIFT

(11) **EP 1 837 495 B1**
(45) Veröffentlichungstag und Bekanntmachung des Hinweises auf die Patenterteilung: **11.02.2009**
(21) Anmeldenummer: 06111624.0
(22) Anmeldetag: 23.03.2006
(51) Int. Cl.: F01N 3/023, F01N 3/035, B01D 53/94

(54) **Verfahren zum Betreiben einer Brennkraftmaschine mit Abgasnachbehandlung**
Method for the operation of an internal combustion engine comprising exhaust gas aftertreatment
Procédé pour faire fonctionner un moteur à combustion interne avec post-traitement des gaz d'échappement

(43) Veröffentlichungstag der Anmeldung: 26.09.2007
(73) Patentinhaber: Ford Global Technologies, LLC, Dearborn, MI 48126 (US)
(72) Erfinder: Schneider, Matthew, 52064, Aachen (DE); Harmsen, Jan, 6369 BX, Simpelveld (NL); Balenovic, Mario, 5645 KT, Eindhoven (AN); Carberry, Brendan, 52074, Aachen (DE); Dubkov, Alexei, 52064, Aachen (DE); Yacoub, Yasser Mohammed Sayed, 50858, Köln (DE)
(74) Vertreter: Drömer, Hans-Carsten

(56) Entgegenhaltungen:
- EP-A- 1 350 932
- EP-A- 1 421 987
- WO-A-00/34632
- DE-A1-6102004 052 25
- US-B1- 6 696 031

## Beschreibung

Die Erfindung betrifft ein Verfahren zum Betreiben einer Brennkraftmaschine mit mindestens einem Zylinder und mindestens einer Abgasleitung zum Abführen der Abgase aus dem mindestens einen Zylinder, bei der ein kombiniertes Abgasnachbehandlungssystem zur Nachbehandlung des Abgases in der mindestens einen Abgasleitung vorgesehen ist, wobei das kombinierte Abgasnachbehandlungssystem ein Vier-Wege-Katalysator ist mit
■ einem Oxidationskatalysator, insbesondere zur Oxidation des im Abgas befindlichen Kohlenmonoxides (CO), und der unverbrannten Kohlenwasserstoffe (HC),
■ einem Speicherkatalysator (LNT) zum Speichern und Reduzieren der im Abgas befindlichen Stickoxide (NOₓ), und
■ einem Partikelfilter zum Sammeln und Verbrennen der im Abgas befindlichen Rußpartikel, und
■ stromaufwärts des Vier-Wege-Katalysators ein zusätzlicher Oxidationskatalysator in der mindestens einen Abgasleitung vorgesehen ist.

Eine mögliche Ausführungsform einer Brennkraftmaschine der zuvor genannten Art, welche mit dem vorliegenden erfindungsgemäßen Verfahren betrieben werden soll, wird beispielsweise in der US 6,696,031 B1 beschrieben.

Nach dem Stand der Technik werden Brennkraftmaschinen zur Reduzierung der Schadstoffemissionen mit verschiedenen Abgasnachbehandlungssystemen ausgestattet. Zwar findet auch ohne zusätzliche Maßnahmen während der Expansion und des Ausschiebens der Zylinderfüllung bei einem ausreichenden hohen Temperaturniveau und dem Vorhandensein genügend großer Sauerstoffmengen eine Oxidation der unverbrannten Kohlenwasserstoffe (HC) und von Kohlenmonoxid (CO) statt. Diese Reaktionen kommen aber aufgrund der stromabwärts schnell abnehmenden Abgastemperatur und der infolgedessen rapide sinkenden Reaktionsgeschwindigkeit schnell zum Erliegen. Eventueller Sauerstoffmangel kann durch eine Sekundärlufteinblasung kompensiert werden. Jedoch müssen in der Regel besondere Reaktoren und/oder Filter im Abgastrakt vorgesehen werden, um die Schadstoffemissionen unter sämtlichen Betriebsbedingungen spürbar zu reduzieren.

Thermische Reaktoren versuchen, eine weitgehende Nachoxidation von HC und CO im Abgassystem zu erzielen, indem eine Wärmeisolation und ein ausreichend großes Volumen im Abgasrohr des Abgassystems vorgesehen werden. Die Wärmeisolation soll ein möglichst hohes Temperaturniveau durch Minimierung der Wärmeverluste sicherstellen, wohingegen ein großes Abgasrohrvolumen eine lange Verweildauer der Abgase gewährleistet. Sowohl die lange Verweildauer als auch das hohe Temperaturniveau unterstützen die angestrebte Nachoxidation. Nachteilig sind der schlechte Wirkungsgrad bei unterstöchiometrischer Verbrennung und die hohen Kosten. Für Dieselmotoren sind thermische Reaktoren aufgrund des grundsätzlich niedrigeren Temperaturniveaus nicht zielführend.

Aus den genannten Gründen kommen nach dem Stand der Technik bei Ottomotoren katalytische Reaktoren zum Einsatz, die unter Verwendung katalytischer Materialien, die die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb (λ ≈ 1) des Ottomotors erfordert.

Dabei werden die Stickoxide NOₓ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die mit einem Luftüberschuss betrieben werden, also beispielsweise im Magerbetrieb arbeitende Ottomotoren, insbesondere aber direkteinspritzende Dieselmotoren aber auch direkteinspritzende Ottomotoren, können die im Abgas befindlichen Stickoxide prinzipbedingt - d. h. aufgrund der fehlenden Reduktionsmittel - nicht reduziert werden.

Zur Oxidation der unverbrannten Kohlenwasserstoffe (HC) und von Kohlenmonoxid (CO) wird ein Oxidationskatalysator im Abgassystem vorgesehen. Zur Reduzierung der Stickoxide werden selektive Katalysatoren - sogenannte SCR-Katalysatoren - eingesetzt, bei denen gezielt Reduktionsmittel in das Abgas eingebracht werden, um die Stickoxide selektiv zu vermindern. Als Reduktionsmittel kommen neben Ammoniak und Harnstoff auch unverbrannte Kohlenwasserstoffe zum Einsatz. Letzteres wird auch als HC-Anreicherung bezeichnet, wobei die unverbrannten Kohlenwasserstoffe direkt in den Abgastrakt eingebracht werden oder aber durch innermotorische Maßnahmen, nämlich durch eine Nacheinspritzung von zusätzlichem Kraftstoff in den Brennraum nach der eigentlichen Verbrennung, zugeführt werden. Dabei soll der nacheingespritzte Kraftstoff nicht im Brennraum durch die noch ablaufende Hauptverbrennung oder aber durch die - auch nach Beendigung der Hauptverbrennung - hohen Verbrennungsgastemperaturen gezündet werden, sondern während des Ladungswechsels in den Abgastrakt eingeleitet werden.

Brennkraftmaschinen, die von einer Nacheinspritzung Gebrauch machen, sind aber von Hause aus sehr anfällig für eine Verdünnung bzw. Kontaminierung des Öls durch unverbrannte Kohlenwasserstoffe. In Abhängigkeit von der Quantität des nacheingespritzten Kraftstoffes und dem Einspritzzeitpunkt, gelangt ein mehr oder weniger großer Anteil des nacheingespritzten Kraftstoffes auf die Zylinderinnenwand und mischt sich dort mit dem anhaftenden Ölfilm. Anschließend gelangt der Kraftstoff zusammen mit dem Öl und dem Blow-by Gas in das Kurbelgehäuse und trägt so maßgeblich zur Ölverdünnung bei. Die Ölverdünnung nimmt mit steigender Kraftstoffmenge und Verschieben der Nacheinspritzung nach spät zu. Durch die Veränderung der Schmierstoffeigenschaften des Öls hat die Ölverdünnung maßgeblich Einfluss auf den Verschleiß und die Haltbarkeit d.h. die Lebensdauer der Brennkraftmaschine.

Grundsätzlich können die Stickoxidemissionen auch mit sogenannten Stickoxidspeicherkatalysatoren (**LNT** - **Lean NOₓ Trap)** reduziert werden. Dabei werden die Stickoxide zunächst - während eines mageren Betriebs der Brennkraftmaschine - im Katalysator absorbiert d.h. gesammelt und gespeichert, um dann während einer Regenerationsphase beispielsweise mittels eines unterstöchiometrischen Betriebs (beispielsweise A < 0,95) der Brennkraftmaschine bei Sauerstoffmangel reduziert zu werden (deNOx). Weitere innermotorische Möglichkeiten zur Realisierung eines fetten d. h. eines unterstöchiometrischen Betriebs der Brennkraftmaschine bietet die Abgasrückführung (AGR) und - bei Dieselmotoren - die Drosselung im Ansaugtrakt. Es kann auch eine Nacheinspritzung von Kraftstoff in den Brennraum vorgenommen werden, wobei sich dies nachteilig auf die Ölverdünnung auswirkt. Auf innermotorische Maßnahmen kann verzichtet werden, wenn das Reduktionsmittel direkt in den Abgastrakt eingebracht wird, beispielsweise durch Einspritzen von zusätzlichem Kraftstoff. Während der Regenerationsphase werden die Stickoxide freigegeben und im wesentlichen in Stickstoffdioxid (N₂), Kohlenstoffdioxid (CO₂) und Wasser (H₂O) umgewandelt. Die Häufigkeit der Regenerationsphasen wird durch die Gesamtemission an Stickoxiden und die Speicherkapazität des LNT bestimmt.

Die Temperatur des Speicherkatalysators (LNT) sollte vorzugsweise in einem Temperaturfenster zwischen 200°C und 450°C liegen, so dass einerseits eine schnelle Reduktion sichergestellt wird und andererseits keine Desorption ohne Konvertierung der wieder freigegebenen Stickoxide stattfindet, was durch zu hohe Temperaturen ausgelöst werden kann.

Eine Schwierigkeit bei der Verwendung und insbesondere bei der Anordnung des LNT im Abgastrakt ergibt sich aus dem im Abgas enthaltenen Schwefel, der ebenfalls im LNT absorbiert wird und im Rahmen einer sogenannten Desulfurisation (deSOₓ) d.h. einer Entschwefelung regelmäßig entfernt werden muss. Hierfür muss der LNT auf hohe Temperaturen, üblicherweise zwischen 600°C und 700 °C, erwärmt und mit einem Reduktionsmittel versorgt werden, was wiederum durch den Übergang zu einem fetten Betrieb der Brennkraftmaschine erreicht werden kann. Die Entschwefelung des LNT kann zur thermischen Alterung dieses Katalysators beitragen und die gewollte Konvertierung der Stickoxide gegen Ende seiner Lebensdauer nachteilig beeinflussen.

Zur Minimierung der Emission von Rußpartikeln werden nach dem Stand der Technik sogenannte regenerative Partikelfilter eingesetzt, die die Rußpartikel aus dem Abgas herausfiltern und speichern, wobei diese Rußpartikel im Rahmen der Regeneration des Filters intermittierend verbrannt werden. Die Intervalle der Regeneration werden dabei unter anderem durch den Abgasgegendruck, der sich infolge des zunehmenden Strömungswiderstandes des Filters aufgrund der anwachsenden Partikelmasse im Filter einstellt, bestimmt.

Die zur Regeneration des Partikelfilters hohen Temperaturen - etwa 550°C bei nicht vorhandener katalytischer Unterstützung - werden im Betrieb nur bei hohen Lasten und hohen Drehzahlen erreicht. Daher muss auf zusätzliche Maßnahmen zurückgegriffen werden, um eine Regeneration des Filters unter allen Betriebsbedingungen zu gewährleisten.

Die Verbrennung der Partikel kann dabei durch im Abgastrakt vorgesehene Zusatzbrenner erfolgen oder aber durch eine Nacheinspritzung von zusätzlichem Kraftstoff in den Brennraum, wobei der nacheingespritzte Kraftstoff bereits im Brennraum gezündet wird, was durch die auslaufende Hauptverbrennung oder die gegen Ende der Verbrennung im Brennraum vorliegenden hohen Temperaturen geschehen kann, so dass die Abgastemperatur der in den Abgastrakt ausgeschobenen Abgase innermotorisch angehoben wird. Nachteilig an dieser Vorgehensweise sind insbesondere die im Abgastrakt auf dem Weg zum Filter zu befürchtenden Wärmeverluste und die damit verbundene Temperaturabsenkung der heißen Abgase. Der Filter kann ohne weiteres einen Meter und mehr vom Auslass des Brennraums entfernt im Abgastrakt angeordnet sein.

Der Kompensation der Wärmeverluste durch die Generierung entsprechend hoher Abgastemperaturen sind durch die Temperaturfestigkeit anderer im Abgasstrang vorgesehener Bauteile Grenzen gesetzt, insbesondere der Temperaturbeständigkeit einer im Abgassystem angeordneten Turbine eines Abgasturboladers, eines Dreiwegekatalysators oder eines Speicherkatalysators. Üblicherweise wird die Turbine mit den höchsten Temperaturen beaufschlagt, da sie am nächsten am Auslaß des Brennraums angeordnet ist.

Der nacheingespritzte Kraftstoff kann auch unverbrannt und gegebenenfalls schon aufbereitet in den Abgastrakt ausgeschoben werden und dann gezielt lokal dort im Abgassystem oxidiert werden, wo hohe Abgastemperaturen notwendig sind, nämlich im Partikelfilter bzw. in seiner unmittelbaren Nachbarschaft. Die Verbrennung des nacheingespritzten Kraftstoffes kann katalytisch mittels eines vor dem Filter positionierten Katalysators initiiert werden. Es kann aber auch eine elektrische Zündung in bzw. an dem Rußfilter vorgesehen werden.

Ähnlich wie bereits für die Reduzierung der Stickoxide vorgeschlagen, kann auch Kraftstoff direkt in den Abgastrakt eingebracht werden. Die weitere Vorgehensweise entspricht der zuvor Beschriebenen, bei der der zusätzlich eingespritzte Kraftstoff unverbrannt in das Abgassystem gelangt und gezielt in der Nachbarschaft des Partikelfilters oxidiert wird.

Es muss berücksichtigt werden, dass der Einsatz von zusätzlichem Kraftstoff, sei es aufgrund eines Überganges zu einem fetten Motorbetrieb oder aber infolge der Anreicherung des Abgases mit Kraftstoff, prinzipbedingt den Kraftstoffverbrauch der Brennkraftmaschine nachteilig beeinflusst. Insbesondere die Häufigkeit, mit der der Partikelfilter regeneriert oder der LNT gereinigt wird, hat maßgeblichen und direkten Einfluss auf die zu diesen Zwecken eingesetzte Kraftstoffmenge und damit auf den Gesamtverbrauch.

Da sowohl die Abgase von Ottomotoren als auch die Abgase von Dieselmotoren - wenn auch in unterschiedlichen Mengen und Qualitäten - unverbrannte Kohlenwasserstoffe (HC), Kohlenmonoxid (CO), Stickoxide (NOₓ) als auch Rußpartikel enthalten, kommen nach dem Stand der Technik in der Regel kombinierte Abgasnachbehandlungssysteme zum Einsatz, die einen oder mehrere der oben beschriebenen Katalysatoren, Reaktoren und/oder Filter umfassen.

Untersuchungen haben gezeigt, dass innermotorische Maßnahmen zur Realisierung eines fetteren Betriebs der Brennkraftmaschine - ob zur Erhöhung der Abgastemperatur mit dem Ziel einer Filterregeneration oder aber für eine Anreicherung des Abgases mit Reduktionsmitteln zur Regeneration des LNT - grundsätzlich zu erhöhten Methan-Emissionen (CH₄) führen, wobei insbesondere bei Dieselmotoren nahezu das gesamte Methan die Abgasleitung und die vorgesehenen Abgasnachbehandlungssysteme durchläuft und in die Umgebung austritt, ohne oxidiert zu werden. Die im Abgastrakt bzw. Oxidationskatalysator im normalen Betrieb der Brennkraftmaschine vorliegenden Temperaturen sind nicht hoch genug, um das im Abgas enthaltene Methan zu konvertieren bzw. zu oxidieren. Hierzu sind Temperaturen von etwa 500°C erforderlich.

Folglich nehmen die HC-Emissionen, welche die Methan-Emissionen mit einschließen, spürbar zu, wenn ein im Abgastrakt vorgesehener Speicherkatalysator gereinigt oder ein Partikelfilter regeneriert werden soll und aus diesem Anlass die Brennkraftmaschine mittels innermotorischer Maßnahmen in den fetten Betrieb überführt wird. Das Methan kann dabei bis zu 90% der unverbrannten Kohlenwasserstoffe ausmachen, die während des fetten Betriebes von der Brennkraftmaschine emittiert und in den Abgastrakt eingeleitet werden.

Andererseits erhöhen sich die NOₓ- und Partikelemissionen, wenn infolge der gesetzlichen Reglementierung der HC-Emissionen weniger häufig in den fetten Betrieb der Brennkraftmaschine gewechselt wird und dadurch ein im Abgastrakt vorgesehener Speicherkatalysator und/oder Partikelfilter nicht mit der notwendigen Häufigkeit regeneriert wird. Ist die Speicherkapazität des LNT erschöpft, gelangen die Stickoxide ungehindert in die Umgebung. Ein zu hoch beladener Partikelfilter fährt zu einem unvorteilhaft hohen Abgasgegendruck, wodurch auch die Qualität der Verbrennung, insbesondere durch einen verschlechterten Ladungswechsel, leidet.

Zusammenfassend kann festgehalten werden, dass die beabsichtigte gleichzeitige Reduzierung der maßgeblichen Schadstoffe, nämlich HC und CO einerseits und NOₓ und Partikel andererseits, in einen Konflikt mündet, insbesondere die gleichzeitige Reduzierung der Stickoxide und der unverbrannten Kohlenwasserstoffe. Darüber hinaus ergeben sich weitere Konflikte bei der Anordnung der einzelnen Abgasnachbehandlungssysteme - des Oxidationskatalysators, des LNT und des Partikelfilters - im Abgastrakt. Das gleichzeitige Betreiben und Steuern der genannten Abgasnachbehandlungssysteme führt zu weiteren Schwierigkeiten, insbesondere bei der Abstimmung der Systeme aufeinander, da die unterschiedlichen Abgasnachbehandlungssysteme verschiedene und teilweise entgegenstehende Randbedingungen erfordern. Insbesondere die Anforderungen an das bevorzugte Temperaturniveau und das Luftverhältnis λ divergieren stark.

Vor diesem Hintergrund ist es die Aufgabe der vorliegenden Erfindung, ein Verfahren zum Betreiben einer Brennkraftmaschine gemäß dem Oberbegriff des Anspruchs 1 aufzuzeigen, mit dem eine zufriedenstellende Reduzierung sämtlicher Schadstoffe möglich ist und mit dem insbesondere der Problematik der hohen Methan-Emissionen begegnet werden kann, welche durch Anreicherung des Abgases mittels innermotorischer Maßnahmen zum Zweck der Reinigung des Speicherkatalysators hervorgerufen werden.

Gelöst wird diese Aufgabe durch ein Verfahren zum Betreiben einer Brennkraftmaschine mit mindestens einem Zylinder und mindestens einer Abgasleitung zum Abführen der Abgase aus dem mindestens einen Zylinder, bei der ein kombiniertes Abgasnachbehandlungssystem zur Nachbehandlung des Abgases in der mindestens einen Abgasleitung vorgesehen ist, wobei das kombinierte Abgasnachbehandlungssystem ein Vier-Wege-Katalysator ist mit
■ einem Oxidationskatalysator, insbesondere zur Oxidation des im Abgas befindlichen Kohlenmonoxides (CO) und der unverbrannten Kohlenwasserstoffe (HC),
■ einem Speicherkatalysator (LNT) zum Speichern und Reduzieren der im Abgas befindlichen Stickoxide (NOₓ), und
■ einem Partikelfilter zum Sammeln und Verbrennen der im Abgas befindlichen Rußpartikel, und
■ stromaufwärts des Vier-Wege-Katalysators ein zusätzlicher Oxidationskatalysator in der mindestens einen Abgasleitung vorgesehen ist,
das dadurch gekennzeichnet ist, dass zum Reduzieren der im Speicherkatalysator (LNT) gespeicherten Stickoxide d. h. zur Reinigung des Speicherkatalysators
■ der zusätzliche Oxidationskatalysator auf eine vorgebbare Temperatur T_{threshold} erwärmt wird, falls die momentane Temperatur T_{catalyst} des Oxidationskatalysators kleiner ist als die vorgegebene Temperatur T_{threshold} d.h. T_{catalyst} T_{threshold}, und anschließend
■ das Abgas für eine vorgebbare Zeitspanne mittels innermotorischer Maßnahmen mit Reduktionsmitteln zum Reduzieren der im Speicherkatalysator (LNT) gespeicherten Stickoxide angereichert wird,
wobei
■ diese Reduzierung vor Beendigung der Reinigung des LNT ausgesetzt wird, falls der momentane Betrieb der Brennkraftmaschine eine weitere Anreicherung des Abgases mittels innermotorischer Maßnahmen nicht zulässt, und
■ falls der momentane Betrieb der Brennkraftmaschine eine Anreicherung des Abgases mittels innermotorischer Maßnahmen wieder zulässt, die Anreicherung fortgesetzt wird, falls
   - die momentane Temperatur T_{catalyst} des zusätzlichen Oxidationskatalysators größer ist als die vorgegebene Temperatur T_{threshold} d. h. T_{catalyst} > T_{threshold} und/oder
   - die momentane Temperatur des Vier-Wege-Katalysators T_{four-way} oberhalb einer vorgebbaren Grenztemperatur T_{Grenz} liegt d.h. T_{four-way} > T_{Grenz}, oder
   - der Vier-Wege-Katalysator die vorgegebene Grenztemperatur T_{Grenz} ohne Einleitung weiterer Maßnahmen erreicht, wobei der Zeitpunkt der Anreicherung auf das Erreichen der erforderlichen Grenztemperatur des Vier-Wege-Katalysators abgestimmt wird.

Bei der Brennkraftmaschine zur Durchführung des erfindungsgemäßen Verfahrens werden drei Abgasnachbehandlungssysteme zu einem kombinierten Abgasnachbehandlungssystem zusammengeführt, wobei gerade durch die Kombination der verwendeten Systeme eine zufriedenstellende Reduzierung der maßgeblichen Schadstoffe, nämlich HC, CO, NOₓ und Partikel, erzielt wird, weshalb der Katalysator auch als Vier-Wege-Katalysator bezeichnet werden kann.

Erfindungsgemäß ist stromaufwärts des kombinierten Abgasnachbehandlungssystems und zu diesem beabstandet ein zusätzlicher Oxidationskatalysator vorgesehen. Dadurch kann eine übermäßige unvorteilhafte Erwärmung des LNT infolge zu hoher Temperaturen des zusätzlichen Oxidationskatalysators verhindert werden. Der zusätzliche Oxidationskatalysator kann zur Oxidation von Methan auf die erforderlichen Temperaturen erwärmt werden, ohne dass eine Desorption der im LNT gespeicherten Stickoxide oder eine thermische Alterung des LNT zu befürchten ist.

Zudem muss berücksichtigt werden, dass sowohl die für Dieselmotoren verwendeten Oxidationskatalysatoren als auch die bei Ottomotoren eingesetzten Drei-Wege-Katalysatoren eine bestimmte Betriebstemperatur benötigen, um die Schadstoffe in ausreichendem Maße zu konvertieren und die Schadstoffemissionen spürbar zu reduzieren. Die Drei-Wege-Katalysatoren sollen im Rahmen der vorliegenden Erfindung zu den Oxidationskatalysatoren gezählt werden.

Die Anordnung stromaufwärts, nahe am Auslass der Brennkraftmaschine hält die Wärmeverluste und die damit verbundene Temperaturabsenkung der heißen Abgase in der mindestens einen Abgasleitung vergleichsweise gering. Dementsprechend erreicht der zusätzliche Oxidationskatalysator seine sogenannte Anspringtemperatur, die beispielsweise zwischen 120°C bis 250°C betragen kann, auch nach einem Kaltstart innerhalb einer verhältnismäßig kurzen Zeitspanne.

Bei Brennkraftmaschinen, die zur Aufladung mindestens eine Turbine eines Abgasturboladers in der mindestens einen Abgasleitung aufweisen, sind Ausführungsformen vorteilhaft, bei denen der zusätzliche Oxidationskatalysator stromaufwärts der Turbine vorgesehen ist. Dieser sogenannte Interims-Oxidationskatalysator bietet aufgrund seiner besonders nahen Anordnung am Auslass der Brennkraftmaschine die oben genannten Vorteile beim Kaltstart in besonders ausgeprägtem Maße.

Vorteilhaft sind Ausführungsformen der Brennkraftmaschine, bei denen die Komponenten des kombinierten Abgasnachbehandlungssystems d. h. der Oxidationskatalysator, der Speicherkatalysator und der Partikelfilter in Reihe geschaltet sind, wobei der Speicherkatalysator stromaufwärts des Partikelfilters und der Oxidationskatalysator stromaufwärts des Speicherkatalysators angeordnet ist.

Die in den beiden Oxidationskatalysatoren - nämlich dem Oxidationskatalysator des Vier-Wege-Katalysators und dem zusätzlichen Katalysator - ablaufenden exothermen Reaktionen bewirken eine Erwärmung des hindurchströmenden Abgases und damit eine Erwärmung der nachgeschalteten d.h. stromabwärts angeordneten Abgasnachbehandlungssysteme, was für die diesen Komponenten zugewiesenen Aufgaben vorteilhaft ist.

Die Temperatur des Speicherkatalysators (LNT) sollte - wie bereits in der Einleitung ausgeführt wurde - vorzugsweise in einem Temperaturfenster zwischen 200°C und 450°C liegen, so dass einerseits eine schnelle Reduktion sichergestellt wird und andererseits keine Desorption ohne Konvertierung der wieder freigegebenen Stickoxide stattfindet, was durch zu hohe Temperaturen ausgelöst werden kann.

Der Partikelfilter erreicht seine Regenerationstemperatur von 550°C grundsätzlich nicht während des normalen mageren Motorenbetriebs. Jedoch findet auch bei niedrigeren Temperaturen eine passive Regeneration des Filters statt, bei der im Abgas befindliche Stickoxide (NOₓ) den Sauerstoff für die Oxidation d.h. die Verbrennung der im Filter gespeicherten Rußpartikel liefern und dabei gleichzeitig selbst zu Stickstoffdioxid (N₂) konvertiert werden. Insofern stellt sich ein Synergieeffekt ein, bei dem sich zwei Schadstoffe gegenseitig neutralisieren bzw. konvertieren, so dass auch hier die vorgeschlagene Reihenfolge bei der Anordnung der einzelnen Komponenten Vorteile aufweist.

Wird die Abgastemperatur gezielt zur Regeneration des Filters angehoben, erreicht auch der Filter seine Regenerationstemperatur von etwa 550°C. Beispielsweise auch, wenn das Abgas mittels innermotorischer Maßnahmen mit Reduktionsmitteln angereichert wird und der Oxidationskatalysator zur Oxidation von Methan auf höhere Temperaturen von etwa 500°C erwärmt wird.

Vorteilhaft sind Ausfixhrungsformen der Brennkraftmaschine, bei denen der Oxidationskatalysator, der Speicherkatalysator und der Partikelfilter über ein gemeinsames Trägersubstrat verfügen. Dies erlaubt eine kompakte Bauweise des Vier-Wege-Katalysators und die Unterbringung sämtlicher Abgasnachbehandlungskomponenten in einem Gehäuse.

Vorteilhaft sind auch Ausfixhrungsformen der Brennkraftmaschine, bei denen der Oxidationskatalysator einerseits und die Kombination aus Speicherkatalysator und Partikelfilter andererseits über separate, vorzugsweise zueinander beabstandete Trägersubstrate verfügen. Die hohen Temperaturen im Oxidationskatalysator - eventuell bedingt durch exotherme Oxidationsvorgänge - könnten den benachbarten Speicherkatalysator (LNT) so stark erwärmen, dass die Temperatur des LNT nicht mehr in dem bevorzugten Temperaturfenster zwischen 200°C und 450°C liegt und eine Desorption der zuvor gespeicherten Stickoxide erfolgt, was das Emissionsverhalten der Brennkraftmaschine verschlechtern würde.

Als Partikelfilter kann ein Wabenfilter dienen. Der Wabenfilter umfasst eine Vielzahl von Kanälen, die in der Regel wechselseitig d.h. im Schachbrettmuster verschlossen sind, so dass das Abgas in die am Einlass des Wabenfilters offenen Kanäle einströmt und auf dem Weg zum Auslass die Kanalwände dieser zum Austritt hin verschlossenen Kanäle durchströmen muss, um in einen Kanal zu gelangen der zum Auslass des Wabenfilters hin offen ist. Bei Oberflächenfiltern sind die Porendurchmesser des Trägersubstrates so gering, dass die Rußpartikel nicht in das Filtermaterial eindringen, sondern sich als Filterkuchen auf der Oberfläche des Filters ablagern.

Der Wabenfilter kann gleichzeitig als Trägersubstrat für den LNT dienen, wobei eine zusätzliche Beschichtung aus katalytischem Material zum Speichern und Reduzieren von Stickoxiden d.h. zur Ausbildung des Speicherkatalysators aufgetragen wird.

Vorteilhaft sind Ausführungsformen der Brennkraftmaschine, bei denen das mindestens eine Trägersubstrat im wesentlichen aus Siliziumcarbid und/oder Cordierit ausgebildet ist. Untersuchungen haben gezeigt, dass aus diesen Werkstoffen gefertigte Trägersubstrate aufgrund der niedrigen spezifischen Wärmekapazität vergleichsweise schnell aufgeheizt bzw. erwärmt werden können, was prinzipbedingt Vorteile bietet hinsichtlich der Schadstoffkonvertierung.

Vorteilhaft sind Ausführungsformen der Brennkraftmaschine, bei denen das mindestens eine Trägersubstrat eine Porosität von 50 bis 70% aufweist.

Vorteilhaft sind Ausführungsformen der Brennkraftmaschine, bei denen stromaufwärts des kombinierten Abgasnachbehandlungssystems ein zusätzlicher Speicherkatalysator (LNT) vorgesehen ist. Vorteile bietet diese Ausführungsform dadurch, dass der zusätzliche Speicherkatalysator näher am Auslass der Brennkraftmaschine positioniert ist, weshalb die den Katalysator durchströmenden Abgase eine höhere Temperatur haben. Bedingt durch die verkürzte Abgasleitung von der Brennkraftmaschine hin zu dem zusätzlichen Speicherkatalysator können die Wärmeverluste des Abgases reduziert werden. Der LNT erreicht - insbesondere nach einem Kaltstart - schneller sein für eine effiziente Konvertierung der Stickoxide erforderliches Temperaturfenster. Zudem bietet ein zusätzlicher Speicherkatalysator zusätzliches Speichervolumen, so dass die Kombination aus den beiden Speicherkatalysatoren weniger häufig gereinigt werden muss als dies bei einem einzelnen Speicherkatalysator erforderlich ist d.h. die Zeitabstände zwischen den Regenerationsphasen können auf diese Weise vergrößert werden.

Vorteilhaft sind Ausführungsformen der Brennkraftmaschine, bei denen stromabwärts des kombinierten Abgasnachbehandlungssystems ein Speicherkatalysator (LNT) und/oder ein Oxidationskatalysator und/oder ein SCR-Katalysator vorgesehen ist.

Eine Kombination aus Speicherkatalysator - nämlich den des kombinierten Abgasnachbehandlungssystems - und eines SCR-Katalysators bietet - in der vorgeschlagenen Reihenfolge - insofern Vorteile, als dass bei der Konvertierung der Stickoxide im Speicherkatalysator das für die Reduzierung der Stickoxide im SCR-Katalysator erforderliche Reduktionsmittel, nämlich Ammoniak, gebildet wird, was üblicherweise gezielt in das Abgas eingebracht werden muss.

Vorteilhaft sind Ausführungsformen der Brennkraftmaschine, bei denen stromaufwärts des kombinierten Abgasnachbehandlungssystems eine Kraftstoffeinspritzdüse vorgesehen ist, mit der Kraftstoff in die mindestens eine Abgasleitung einbringbar ist. Damit lässt sich gezielt die Abgastemperatur in der mindestens einen Abgasleitung durch Verbrennung lokal eingespritzten Kraftstoffes anheben, beispielsweise für eine Filterregeneration.

Das bereits für die erfindungsgemäße Brennkraftmaschine Gesagte gilt auch für das erfindungsgemäße Verfahren.

Erfindungsgemäß wird die Temperatur des zusätzlichen Oxidationskatalysators berücksichtigt, wobei die Temperatur entweder mittels eines Temperatursensors direkt gemessen oder berechnet wird. Die Berechnung der Temperatur kann sich dabei beispielsweise auf an anderer Stelle im Abgastrakt erfasste Temperaturen stützen. Auf diese Weise können bereits vorhandene Sensoren genutzt werden, beispielsweise für eine On-Board-Diagnose (OBD) vorgesehene Sensoren.

Die vorgegebene Temperatur T_{threshold} kann grundsätzlich variieren und hängt von der jeweiligen Zielsetzung ab. Da erfindungsgemäß die Anreicherung des Abgases mit Reduktionsmitteln zum Reduzieren der im Speicherkatalysator (LNT) gespeicherten Stickoxide mittels innermotorischer Maßnahmen erfolgt bzw. realisiert wird, ist die Vorgabe einer ausreichend hohen Temperatur zur Oxidation von Methan d.h. T_{threshold} ≈ 500°C - 550°C als Mindesttemperatur erforderlich und zielführend. Die im zusätzlichen Oxidationskatalysator ablaufenden exothermen Vorgänge, insbesondere während des fetten Betriebes der Brennkraftmaschine, führen zu einer zusätzlichen Erwärmung des Abgases, was bei der Festlegung der Temperatur T_{threshold} in der Weise berücksichtigt werden kann, dass diese Temperatur niedriger angesetzt wird, beispielsweise T_{threshold} ≈ 400°C.

Der stromabwärts des zusätzlichen Oxidationskatalysators vorgesehene Speicherkatalysator (LNT) erwärmt sich und arbeitet in dem für die Reinigung bevorzugten Temperaturfenster zwischen 200°C und 450°C, so dass grundsätzlich alle Vorraussetzung für eine Anreicherung des Abgases zum Zweck der LNT-Reinigung gegeben sind. Folglich wird die Reinigung des Speicherkatalysators auch tatsächlich durchgeführt. Gegebenenfalls werden noch andere Kriterien berücksichtigt, wie beispielsweise die Notwendigkeit einer Reinigung, indem der Sättigungsgrad des Speicherkatalysators in die Entscheidung einer möglichen Abgasanreicherung einbezogen wird.

Nach der Anreicherung des Abgasstromes mit Reduktionsmitteln zum Zweck der Reinigung des Speicherkatalysators d. h. der Freigabe und der Reduktion der gespeicherten Stickoxide wird die Brennkraftmaschine wieder in den mageren Betrieb überfährt bzw. die innermotorischen Maßnahmen zur Abgasanreicherung werden eingestellt, wenn der Speicherkatalysator in dem gewollten Umfang gereinigt wurde.

Häufig kann die Reinigung des LNT aber nicht abgeschlossen werden, denn während der Anreicherung des Abgases können sich die Betriebsparameter der Brennkraftmaschine - beispielsweise die Last bzw. das Drehmoment und/oder die Drehzahl - ändern und zwar in einer Weise, die einen fetten Betrieb der Brennkraftmaschine nicht gestatten, so dass eine weitere Abgasanreicherung mittels innermotorischer Maßnahmen nicht mehr möglich ist.

Gemäß dem erfindungsgemäßen Verfahren wird die Reduzierung der gespeicherten Stickoxide d. h. die Reinigung des LNT ausgesetzt, falls der momentane Betrieb der Brennkraftmaschine eine weitere Anreicherung des Abgases mittels innermotorischer Maßnahmen nicht zulässt.

Da aber der zusätzliche Oxidationskatalysator zum Zweck der Reinigung des LNT gezielt auf hohe Temperaturen erwärmt wurde, ist es vorteilhaft, das einmal aufgeheizte Abgassystem zu nutzen und die Reinigung des LNT fortzusetzen, sobald die kurzzeitig fehlende und notwendige Randbedingung - Möglichkeit eines fetten Betriebs der Brennkraftmaschine - wieder vorliegt. Auf diese Weise könnte auch der für die Erwärmung eingesetzte Kraftstoff optimal verwertet werden, was den Kraftstoffverbrauch der Brennkraftmaschine vermindern würde. Andernfalls müsste der Oxidationskatalysator - unter Einsatz von zusätzlichem Kraftstoff - wieder neu erwärmt werden.

Aus diesem Grund wird - bei Vorliegen bestimmter Vorraussetzungen - die Anreicherung fortgesetzt, sobald der momentane Betrieb der Brennkraftmaschine eine Anreicherung des Abgases mittels innermotorischer Maßnahmen wieder zulässt. Hierzu muss aber die momentane Temperatur T_{catalyst} des Oxidationskatalysators größer sein als die vorgegebene Temperatur T_{threshold} d.h. T_{catalyst} > T_{threshold} und/oder die momentane Temperatur des Vier-Wege-Katalysators T_{four-way} oberhalb einer vorgebbaren Grenztemperatur T_{Grenz} liegen d.h. T_{four-way} > T_{Grenz}, wobei T_{Grenz} zur Oxidation von Methan mindestens 500°C beträgt.

Hintergrund für die beiden letztgenannten Vorrausetzungen ist, dass zumindest einer der beiden Oxidationskatalysatoren die notwendige Temperatur für die Oxidation von Methan aufweisen muss, damit die Emissionen an unverbrannten Kohlenwasserstoffen - bedingt durch eine LNT-Reinigung - nicht unverhältnismäßig anwachsen.

Untersuchungen haben gezeigt, dass der Vier-Wege-Katalysator seine maximale Temperatur erst mit einer zeitlichen Verzögerung zur Erwärmung des zusätzlichen Oxidationskatalysators bzw. zu dessen Höchsttemperatur erreicht. Häufig erreicht der Vier-Wege-Katalysator seine maximale Temperatur erst nach Beendigung der Abgasanreicherung, was Vorteile hat, denn die hohen Temperaturen würden gegebenenfalls zu einer Desorption der im LNT gespeicherten Stickoxide führen, falls dieser LNT nicht kurz zuvor gereinigt worden wäre.

In der Abgasleitung breitet sich ausgehend von dem zusätzlichen Oxidationskatalysator eine Temperaturwelle aus, die die zeitlich verzögerte Erwärmung des Vier-Wege-Katalysators erklärt. Die thermische Trägheit des stromabwärts des zusätzlichen Oxidationskatalysators gelegenen Abgasstranges ist dabei zu berücksichtigen.

Die sich in der Abgasleitung ausbreitende Temperaturwelle ist auch der Grund, weshalb gemäß dem erfindungsgemäßen Verfahren eine weitere Möglichkeit vorgesehen ist, bei der die unterbrochene bzw. ausgesetzte Anreicherung fortgesetzt wird, sobald der momentane Betrieb der Brennkraftmaschine eine Anreicherung des Abgases mittels innermotorischer Maßnahmen wieder zulässt.

Diese Möglichkeit deckt den Fall ab, dass der Vier-Wege-Katalysator ohne weitere Maßnahmen d. h. ohne weiteres Zutun von selbst die vorgegebene Grenztemperatur T_{Grenz} wieder erreicht. Obwohl die momentane Temperatur T_{catalyst} des zusätzlichen Oxidationskatalysators kleiner ist als die vorgegebene Temperatur T_{threshold} d.h. T_{catalyst} < T_{threshold} und/oder die momentane Temperatur des Vier-Wege-Katalysators T_{four-way} unterhalb einer vorgebbaren Grenztemperatur T_{Grenz} liegt d.h. T_{four-way} < T_{Grenz}, kann der Vier-Wege-Katalysator die Grenztemperatur ohne die Einleitung irgendwelcher Maßnahmen erreichen, denn der Wellenberg der sich ausbreitenden Temperaturwelle kann sich zwischen dem zusätzlichen Oxidationskatalysator und dem Vier-Wege-Katalysator befinden, so dass noch etwas Zeit verstreichen muss, bevor der Vier-Wege-Katalysator von der Temperaturwelle erfasst wird und die notwendige Grenztemperatur zur Oxidation von Methan erreicht.

Andernfalls, falls keine der drei oben genannten Möglichkeiten für eine Fortsetzung der Abgasanreicherung gegeben ist, kann der zusätzliche Oxidationskatalysator wieder auf die vorgegebene Temperatur T_{threshold} erwärmt werden. Alternativ wird die Reinigung des LNT abgebrochen, ohne dass eine vollständige Reinigung angestrebt wird.

Die Erwärmung des zusätzlichen Oxidationskatalysators auf derart hohe Temperaturen kann zu einer zeitlich verzögerten Regeneration des stromabwärts gelegenen Partikelfilters genutzt werden, denn kurz nach der Reinigung des LNT liegen auch die Bedingungen für eine Filterregeneration vor, nämlich die erforderlich hohen Temperaturen und der notwendige Sauerstoff für die Verbrennung des gesammelten Rußes.

Es ergeben sich demnach in vorteilhafter Weise Synergieeffekte, wobei sich an die Reinigung des Speicherkatalysators (deNOₓ) gleichzeitig eine Filterregeneration anschließt, so dass eine gezielte isolierte Filterregeneration weniger häufig durchzuführen ist als nach dem Stand der Technik üblich. Dies führt dazu, dass der Kraftstoffmehrverbrauch infolge Reinigung bzw. Regeneration der jeweiligen Abgasnachbehandlungssysteme im Vergleich zu aus dem Stand der Technik bekannten Verfahren niedriger ausfällt. Der Gesamtkraftstoffverbrauch kann folglich mit dem erfindungsgemäßen Verfahren reduziert werden.

Die Anhebung der Temperatur des Oxidationskatalysators d. h. die Vorgabe einer Temperatur, die höher ist als 250°C, kann ebenfalls hilfreich sein, falls eine Entschwefelung des Speicherkatalysators beabsichtigt ist. Dies erfordert üblicherweise Temperaturen des LNT's von 600°C bis 700 °C bevor der LNT mit einem Reduktionsmittel zur Reduktion der Schwefeloxide (SOₓ) versorgt wird.

Die gezielt eingeleitete Entschwefelung (deSOₓ) des Speicherkatalysators kann gleichzeitig für eine tiefe Regeneration des Partikelfilters genutzt werden. Eine derartige tiefe Filterregenration ist bei Einsatz des erfindungsgemäßen Verfahrens weniger häufig notwendig und durchzuführen als nach dem Stand der Technik üblich, da der Filter bereits bei jeder Reinigung des LNT zumindest teilweise regeneriert wird. Der Gesamtkraftstoffverbrauch kann auch hierdurch mit dem erfindungsgemäßen Verfahren spürbar reduziert werden.

Vorteilhaft sind Ausführungsformen des Verfahrens, bei denen die Brennkraftmaschine zur Anreicherung des Abgases mit Reduktionsmitteln unterstöchiometrisch (λ < 1) d.h. fett betrieben wird. Wie bereits in der Beschreibungseinleitung ausgeführt wurde, führt eine Verbrennung des in den Brennraum eingespritzten Kraftstoffes unter Sauerstoffmangel zu einer Anreicherung des Abgasstromes mit unverbrannten Kohlenwasserstoffen, die dann als Reduktionsmittel zur Reinigung des LNT des Vier-Wege-Katalysators dienen können.

Dabei ist zu berücksichtigen, dass es sich bei dem unterstöchiometrischen Betrieb der Brennkraftmaschine um eine innermotorische Maßnahem handelt, die zu erhöhten Methan-Emissionen führt, weshalb der Oxidationskatalysator ein entsprechend hohe Temperatur - 500°C bis 550°C - aufweisen muss, bevor in den unterstöchiometrischen Betrieb gewechselt wird.

Der Übergang zu einem fetten bzw. fetteren Motorenbetrieb kann auch durch die Rückführung heißen Abgases realisiert bzw. unterstützt werden, da auch dies zu einer Abnahme des Sauerstoffgehalts der Zylinderfrischladung führt. Bei Dieselmotoren kann die Drosselung der angesaugten Luft im Ansaugtrakt Anwendung finden.

Vorteilhaft sind auch Ausführungsformen des Verfahrens, bei denen zur Anreicherung des Abgases mit Reduktionsmitteln Kraftstoff in den mindestens einen Zylinder nacheingespritzt wird, der zumindest teilweise unverbannt in die mindestens ein Abgasleitung ausgeschoben wird.

Vorteilhaft sind Ausführungsformen des Verfahrens, bei denen die Erwärmung des Oxidationskatalysators durch eine Erhöhung der Abgastemperatur realisiert wird, wobei die Erhöhung der Abgastemperatur durch innermotorische Maßnahmen erzielt wird.

Innermotorische Maßnahmen können also sowohl zur Anreicherung des Abgases mit Reduktionsmitteln als auch zur Erwärmung des zusätzlichen Oxidationskatalysators herangezogen werden. Eine innermotorische Maßnahme zur Erhöhung der Abgastemperatur ist beispielsweise die gezielte Umgehung eines im Ansaugtrakt vorgesehenen Ladeluftkühlers, wodurch die Temperatur der Zylinderfrischladung angehoben wird. Mit einer Reduzierung des Sauerstoffüberschusses der Zylinderfrischladung kann die Abgastemperatur ebenfalls erhöht werden.

Vorteilhaft sind dabei auch Ausführungsformen des Verfahrens, bei denen die Erhöhung der Abgastemperatur durch mindestens eine Nacheinspritzung von Kraftstoff in den mindestens einen Zylinder realisiert wird, wobei der nacheingespritzte Kraftstoff verbrannt wird. Dadurch, dass der Verbrennung mehr Kraftstoff zur Verfügung gestellt wird, wird auch mehr Energie bei der chemischen Umsetzung des Kraftstoffes freigesetzt, die dann unter anderem zur Erwärmung der Verbrennungsgase genutzt wird. Die vergleichsweise späte Verbrennung des nacheingespritzten Kraftstoffes während der Expansionsphase führt zu einer Temperaturerhöhung der während des Ladungswechsels in die mindestens eine Abgasleitung ausgeschobenen Abgase. Gegebenenfalls reicht die Flammenfront dieser Verbrennung bis in die Abgasleitung hinein.

Vorteilhaft sind auch Ausführungsformen des Verfahrens, bei denen die Erhöhung der Abgastemperatur durch eine Rückführung von Abgas (AGR) realisiert wird. Die heißen, in den Brennraum bzw. mindestens einen Zylinder zurückgeführten Abgase erhöhen die Temperatur der Zylinderfrischladung.

Vorteilhaft sind bei Dieselmotoren des weiteren Ausführungsformen des Verfahrens, bei denen die Erhöhung der Abgastemperatur durch eine verstärkte Drosselung im Ansaugtrakt des Dieselmotors realisiert wird.

Vorteilhaft sind ebenfalls Ausführungsformen des Verfahrens, bei denen die Erhöhung der Abgastemperatur durch Absenkung des Luftverhältnisses λ bei magerem d.h. überstöchiometrischem Betrieb (λ > 1) der Brennkraftmaschine realisiert wird.

Vorteilhaft sind auch Ausfixhrungsformen des Verfahrens, bei denen die Erhöhung der Abgastemperatur dadurch realisiert wird, dass Kraftstoff in die mindestens eine Abgasleitung stromaufwärts des zusätzlichen Oxidationskatalysators eingebracht und oxidiert wird. Erfindungsgemäß werden zur Anreicherung des Abgases mit Reduktionsmittel innermotorische Maßnahmen genutzt, wohingegen zur Anhebung der Abgastemperatur Kraftstoff in die mindestens eine Abgasleitung eingespitzt werden kann.

Diese Ausfixhrungsform hat den Vorteil, dass der Betrieb der Brennkraftmaschine unabhängig von der Steuerung der Abgasnachbehandlungssysteme wird, d.h. die Brennkraftmaschine kann mager d.h. überstöchiometrisch betrieben werden und gleichzeitig kann eine Reinigung des LNT (deNOₓ) eingeleitet und durchgeführt werden. Zudem werden bei der Einspritzung von Reduktionsmitteln bzw. Kraftstoff direkt in die Abgasleitung die durch innermotorische Maßnahmen hervorgerufenen negativen Effekte, insbesondere eine erhöhte Methan-Emission, vermieden.

Vorteilhaft sind Ausführungsformen des Verfahrens, bei denen die Anreicherung des Abgases mit Reduktionsmitteln intermittierend vorgenommen wird. Diese Verfahrensvariante eignet sich besonders für eine nachhaltige Oxidation der unverbrannten Kohlenwasserstoffe, also insbesondere für die Fälle, in denen hohe Methan-Mengen zu konvertieren d.h. zu oxidieren sind, wie weiter unten noch erläutert werden wird. Folglich ist die in Rede stehende Verfahrensvariante besonders günstig beim Einsatz innermotorischer Maßnahmen zur Anreicherung des Abgases mit Reduktionsmittel oder zur Erwärmung des Abgases.

Vorteilhaft sind dabei Ausfixhrungsformen des Verfahrens, bei denen zur intermittierenden Anreicherung des Abgases mit Reduktionsmittel die Brennkraftmaschine abwechselnd unterstöchiometrisch (λ < 1) d. h. fett und überstöchiometrisch (λ > 1) d. h. mager betrieben wird, so dass die sauerstoffarmen fetten Betriebsphasen der Brennkraftmaschine jeweils von einer sauerstoffreichen mageren Betriebsphase unterbrochen werden. Dabei ergibt sich gewissermaßen ein pulsierender Betrieb der Brennkraftmaschine für eine vorgebbare Zeitspanne. Gegebenenfalls ist bereits ein einzelner Puls d.h. ein einmaliger Übergang in den fetten Betrieb ausreichend für die Reinigung des LNT.

Ein derartiger Betrieb der Brennkraftmaschine gewährleistet zum einen die Bereitstellung des für die Oxidation von unverbrannten Kohlenwasserstoffen notwendigen Sauerstoffes und gleichzeitig auch den für die Reinigung des Speicherkatalysators (deNOₓ) erforderlichen fetten Betrieb. Hinsichtlich der Verminderung der HC-Emissionen ist diese Verfahrensvariante vorteilhaft, wobei die Konvertierung der gespeicherten Stickoxide im LNT nach wie vor stattfindet, aber die Konvertierungsrate infolge des phasenweisen Sauerstoffüberschusses leicht abnimmt. Letzteres ist auch dadurch bedingt, dass während des mageren Betriebs Sauerstoff im LNT aufgenommen und gespeichert wird und dieser bzw. die Freigabe dieses Sauerstoffes die Reduktion der Stickoxide (NOₓ) während des fetten Betriebs der Brennkraftmaschine nachteilig beeinflusst d.h. mindert.

Vorteilhaft sind dabei Ausführungsformen des Verfahrens, bei denen die sauerstoffarmen fetten Betriebsphasen der Brennkraftmaschine weniger als 8 Sekunden, vorzugsweise 2 bis 3 Sekunden, dauern, wie Versuche gezeigt haben.

Im folgenden wird die Erfindung anhand eines Ausführungsbeispiels gemäß den Figuren 1 bis 4 näher beschrieben. Hierbei zeigt:
- Fig. 1: schematisch eine Ausführungsform der Brennkraftmaschine,
- Fig. 2: die Temperaturverteilung in der Abgasleitung an verschiedenen Orten in Abhängigkeit vom Luftverhältnis λ über der Zeit t,
- Fig. 3: die Konzentrationen an unverbrannten Kohlenwasserstoffen (HC) in der Abgasleitung an verschiedenen Orten über der Zeit t, und
- Fig. 4: schematisch eine Ausführungsform des Verfahrens in Gestalt eines Flussdiagramms.

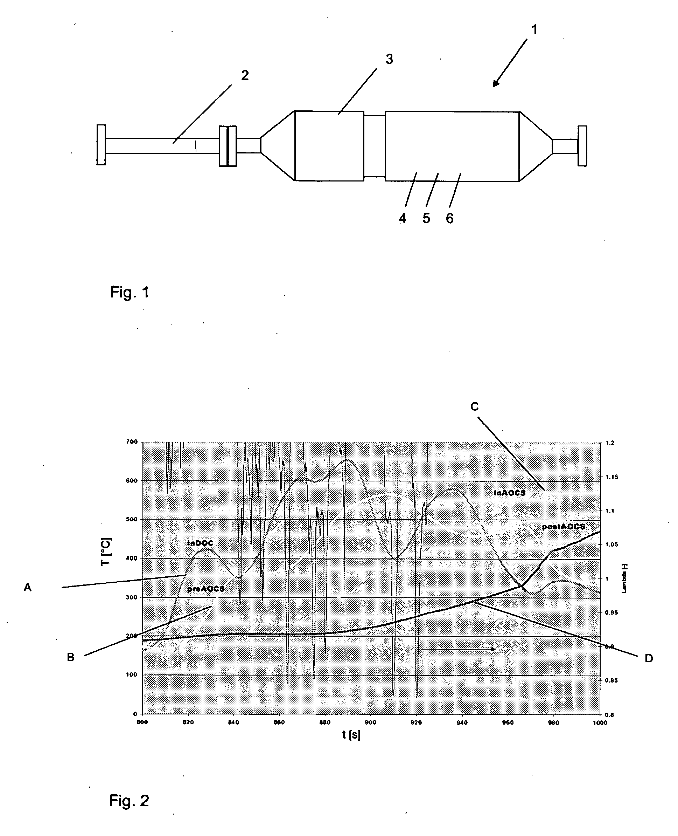

Figur 1 zeigt schematisch einen Abschnitt der Abgasleitung 2 einer ersten Ausführungsform der Brennkraftmaschine, in dem Abgasnachbehandlungssysteme 3,4,5,6 zur Reduzierung der im Abgas enthaltenen Schadstoffe angeordnet sind.

In der Abgasleitung 2 ist ein kombiniertes Abgasnachbehandlungssystem 1 zur Nachbehandlung des Abgases vorgesehen, wobei das kombinierte Abgasnachbehandlungssystem 1 ein Vier-Wege-Katalysator 1 ist. Der Vier-Wege-Katalysator 1 umfasst einen Oxidationskatalysator 4 zur Oxidation des im Abgas befindlichen Kohlenmonoxides (CO) und der unverbrannten Kohlenwasserstoffe (HC), einen Speicherkatalysator (LNT) 5 zum Speichern und Reduzieren der im Abgas befindlichen Stickoxide (NOₓ) und einen Partikelfilter 6 zum Sammeln und Verbrennen der im Abgas befindlichen Rußpartikel.

Die Komponenten 4,5,6 des kombinierten Abgasnachbehandlungssystems 1 sind in Reihe geschaltet d. h. angeordnet, wobei der Speicherkatalysator 5 stromaufwärts des Partikelfilters 6 und der Oxidationskatalysator 4 stromaufwärts des Speicherkatalysators 5 angeordnet ist.

Stromaufwärts des kombinierten Abgasnachbehandlungssystems 1 ist ein zusätzlicher Oxidationskatalysator 3 vorgesehen.

Im folgenden wird auf das erfindungsgemäße Verfahren eingegangen, wobei ein Abgasnachbehandlungssystem wie in Figur 1 dargestellt vorrausgesetzt wird.

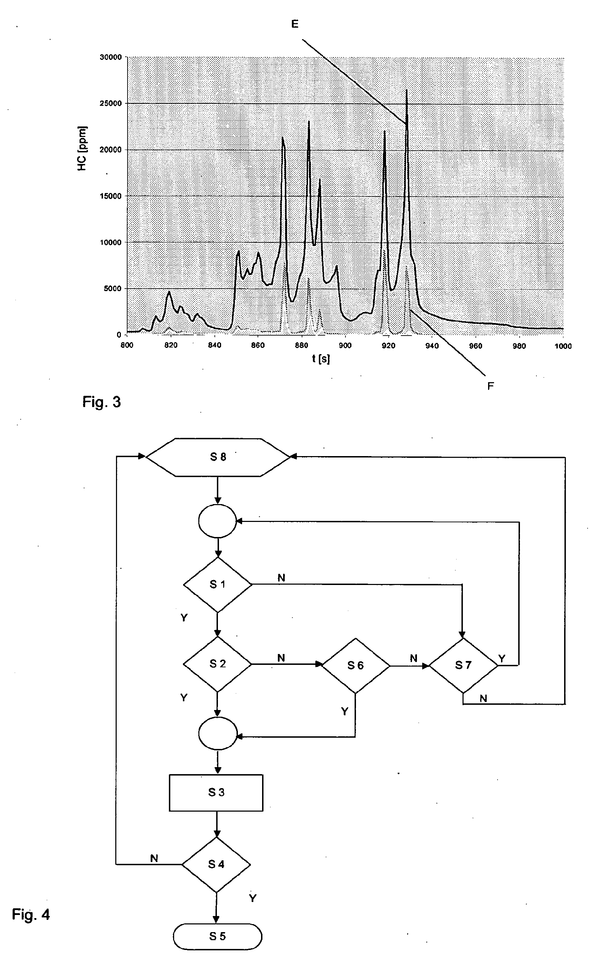

Die Figuren 2 und 3 dienen zur Erläuterung der dem erfindungsgemäßen Verfahren zugrundeliegenden Verhältnisse in der Abgasleitung in Abhängigkeit vom Betrieb der Brennkraftmaschine, insbesondere in Abhängigkeit vom momentanen Luftverhältnis λ. Aus diesen Figuren wird ersichtlich, auf welcher Strategie das Verfahren basiert.

Figur 2 zeigt die Temperaturverteilung in der Abgasleitung 2 an verschiedenen Orten (Kurve A, B, C und D) in Abhängigkeit vom Luftverhältnis λ über der Zeit t.

In Figur 3 sind die Konzentrationen an unverbrannten Kohlenwasserstoffen (HC) in der Abgasleitung 2 abgebildet, die - wie noch erläutert werden wird - mit den in Figur 2 dargestellten Temperaturverläufen korrespondieren.

Zu Beginn d. h. bis zu einer Zeit von t ≈ 840s wird die Brennkraftmaschine überstöchiometrisch d. h. mager betrieben (λ > 1,13). In dieser Phase wird der zusätzliche Oxidationskatalysator auf ausreichend hohe Temperaturen erwärmt, um die unverbrannten Kohlenwasserstoffe (HC), welche sich aus der sich anschließenden Abgasanreicherung mittels innermotorischer Maßnahmen ergeben, insbesondere das gebildete Methan, zu oxidieren. Kurve A gibt die Temperatur im zusätzlichen Oxidationskatalysator wieder.

In dieser Phase werden die unverbrannten Kohlenwasserstoffe (HC) nahezu vollständig im zusätzlichen Oxidationskatalysator oxidiert, wobei während des mageren Betriebs der Brennkraftmaschine eine Temperatur T_{threshold} > 200°C ausreichend ist. Die HC-Konzentration am Auslass der Brennkraftmaschine bzw. vor dem zusätzlichen Oxidationskatalysator wird durch die Kurve E und die HC-Konzentration hinter dem zusätzlichen Oxidationskatalysator durch die Kurve F wiedergegeben.

Zur Oxidation von Methan ist eine Temperatur T_{treshold} ≈ 500°C - 550°C als Mindesttemperatur erforderlich. Die im zusätzlichen Oxidationskatalysator ablaufenden exothermen Vorgänge, insbesondere während eines fetten Betriebes der Brennkraftmaschine (t ≈ 840s bis 890s), führen zu einer zusätzlichen Erwärmung des Abgases, was bei der Festlegung der Temperatur T_{threshold} in der Weise berücksichtigt werden kann, dass diese Temperatur niedriger angesetzt wird, beispielsweise T_{threshold} ≈ 420°C.

Der stromabwärts des zusätzlichen Oxidationskatalysators vorgesehene Speicherkatalysator (LNT) erwärmt sich und arbeitet in dem für die Reinigung bevorzugten Temperaturfenster zwischen 200°C und 450°C, so dass grundsätzlich alle Vorraussetzung für eine Anreicherung des Abgases zum Zweck der LNT-Reinigung gegeben sind. Die Temperatur im Vier-Wege-Katalysator und damit die Temperatur im Speicherkatalysator wird durch die Kurve C wiedergegeben. Folglich wird die Reinigung des Speicherkatalysators auch tatsächlich durchgeführt. Die Temperatur vor dem Vier-Wege-Katalysator wird durch Kurve B wiedergegeben und die Temperatur hinter dem Vier-Wege-Katalysator durch Kurve D.

Die Anreicherung des Abgases wird intermittierend durchgeführt, wobei die Brennkraftmaschine abwechselnd unterstöchiometrisch (λ < 1) d.h. fett und überstöchiometrisch (λ > 1) d.h. mager betrieben wird, so dass sich sauerstoffarme fette Betriebsphasen und sauerstoffreiche magere Betriebsphasen abwechseln. Daraus ergibt sich für eine Zeitspanne von 50 Sekunden ein pulsierender Betrieb der Brennkraftmaschine (t ≈ 840s bis 890s). Diese Verfahrensvariante eignet sich besonders für eine nachhaltige Oxidation der unverbrannten Kohlenwasserstoffe. Kurve E zeigt deutlich die sehr hohen Emissionen an unverbrannten Kohlenwasserstoffen (HC) während der Reinigung des LNT. Gleichzeitig macht Kurve F - HC-Konzentration hinter dem zusätzlichen Oxidationskatalysator - die Wirksamkeit der eingeleiteten Maßnahme - Erwärmung des zusätzlichen Oxidationskatalysators - deutlich.

Zum Zeitpunkt t = 890s geht die Brennkraftmaschine in den Leerlaufbetrieb über, weshalb die Abgasanreicherung vor Beendigung der Reinigung des LNT ausgesetzt werden muss, da der Leerlaufbetrieb der Brennkraftmaschine eine weitere Anreicherung des Abgases mittels innermotorischer Maßnahmen nicht zulässt. Die Temperatur in dem zusätzlichen Oxidationskatalysator fällt deutlich; auch aufgrund der fehlenden Wärme, die bei der Oxidation von unverbrannten Kohlenwasserstoffen freigesetzt wird.

Nach Beendigung des Leelaufbetriebes würde der momentane Betrieb der Brennkraftmaschine eine Anreicherung des Abgases mittels innermotorischer Maßnahmen grundsätzlich wieder zulassen, so dass die Anreicherung fortgesetzt werden kann, falls auch die erforderlichen Temperaturen vorliegen.

Die Temperatur des zusätzlichen Oxidationskatalysators hat während des Leerlaufbetriebes stark abgenommen (Kurve A), liegt aber noch über der vorgegebenen Temperatur T_{threshold} ≈ 400°C. Die Temperatur vor und im Vier-Wege-Katalysator ist hingegen in der Zwischenzeit gestiegen und liegt oberhalb der vorgegebenen Grenztemperatur T_{Grenz}, beispielsweise T_{Grenz}, ≈ 400°C (Kurve B und Kurve C).

Daher wird die Anreicherung des Abgasstromes mit Reduktionsmitteln zum Zweck der Reinigung des Speicherkatalysators fortgesetzt und zwar abermals intermittierend (t ≈ 905s bis 925s).

Während dieser zweiten Anreicherungsphase des Abgases werden wesentliche Teile der Emissionsspitzen an unverbrannten Kohlenwasserstoffen im Oxidationskatalysator des Vier-Wege-Katalysators abgebaut bzw. konvertiert, wohingegen während der ersten Anreicherungsphase aufgrund der noch niedrigen Temperaturen eine Konvertierung im Vier-Wege-Katalysator kaum zu beobachten ist. Die HC-Konzentration vor dem Vier-Wege-Katalysator zeigt Kurve F. Kurve G zeigt die HC-Konzentration hinter dem Vier-Wege-Katalysator.

Figur 4 zeigt schematisch eine Ausführungsform des Verfahrens in Gestalt eines Flussdiagramms und verdeutlicht, welche Entscheidungen und Maßnahmen zu treffen sind bzw. getroffen werden.

In einem ersten Schritt (S1) wird zunächst geprüft, ob der momentane Betrieb der Brennkraftmaschine eine Anreicherung des Abgases mittels innermotorischer Maßnahmen grundsätzlich zulässt.

Wird diese bejaht, muss geprüft werden, ob die für eine Oxidation der unverbrannten Kohlenwasserstoffe hohen Temperaturen im stromaufwärts des Vier-Wege-Katalysators vorgesehenen zusätzlichen Oxidationskatalysator vorliegen (S2). Falls dies der Fall ist, wird das Abgas mit Reduktionsmitteln angereichert bzw. die Brennkraftmaschine in einen fetten Betrieb überführt (S3).

Schließlich muss festgestellt werden, ob die Reinigung des Speicherkatalysators im gewünschten Umfang erfolgt ist oder nicht (S4). Letzteres kann beispielsweise dadurch bedingt sein, dass die Abgasanreicherung vor Beendigung der Reinigung des LNT ausgesetzt werden musste, da der Betrieb der Brennkraftmaschine eine weitere Anreicherung des Abgases mittels innermotorischer Maßnahmen nicht zugelassen hat. Wurde die Reinigung des Speicherkatalysators erfolgreich durchgeführt, kann das Verfahren zur Steuerung der Abgasnachbehandlung bzw. die Abgasanreicherung eingestellt werden und die Brennkraftmaschine in den mageren Betrieb überführt werden (S5).

Erfolgte die Reinigung des LNT hingegen nur unvollständig, wird gemäß ersten Verfahrenschritt (S1) wieder geprüft, ob der momentane Betrieb der Brennkraftmaschine eine erneute Anreicherung des Abgases mittels innermotorischer Maßnahmen zulässt, um die Reinigung des LNT fortzusetzen bzw. zu beenden.

Auch wenn die momentane Temperatur T_{catalyst} des zusätzlichen Oxidationskatalysators zu niedrig ist, um Methan zu oxidieren, d.h. T_{catalyst} < T_{threshold}, kann eine Abgasanreicherung durchgeführt werden, falls die momentane Temperatur des Vier-Wege-Katalysators T_{four-way} oberhalb einer vorgegebenen Grenztemperatur T_{Grenz} liegt d.h. T_{four-way} > T_{Grenz}. Denn für eine Oxidation der unverbrannten Kohlenwasserstoffe, insbesondere von Methan, ist es ausreichend, wenn einer der beiden Oxidationskatalysatoren - entweder der zusätzliche Oxidationskatalysator oder der Oxidationskatalysator des Vier-Wege-Katalysators - die erforderliche Temperatur aufweist. Ist letzteres der Fall, kann eine Abgasanreicherung eingeleitet werden (S3).

Insofern ist nicht nur die Temperatur des zusätzlichen Oxidationskatalysators (S2), sondern auch die Temperatur des Oxidationskatalysator des Vier-Wege-Katalysators zu prüfen (S6).

Selbst wenn beide Oxidationskatalysatoren nicht die erforderliche Temperatur aufweisen, kann eine Abgasanreicherung und damit eine Reinigung des LNT durchgeführt werden, falls der Vier-Wege-Katalysator die vorgegebene Grenztemperatur T_{Grenz} ohne Einleitung weiterer Maßnahmen erreicht d.h. noch genügend Wärme im Abgassystem vorhanden ist; beispielsweise, weil sich eine Temperaturwelle in der Abgasleitung ausbreitet, aber sich momentan noch zwischen dem zusätzlichen Oxidationskatalysator und dem Oxidationskatalysator des Vier-Wege-Katalysators befindet. Vor Einleitung der Abgasanreicherung muss daher lediglich eine gewisse Zeit verstreichen, bis der Vier-Wege-Katalysator von der Temperaturwelle erfasst wird und sich genügend erwärmt (S7).

Um entscheiden zu können, ob der Vier-Wege-Katalysator die vorgegebene Grenztemperatur T_{Grenz} ohne Einleitung weiterer Maßnahmen erreicht, kann ein Sensor zur Erfassung der Abgastemperatur zwischen dem zusätzlichen Oxidationskatalysator und dem Oxidationskatalysator des Vier-Wege-Katalysators vorgesehen werden. Alternativ kann diese Temperatur auch berechnet werden.

Ist genügend Wärme im Abgassystem vorhanden, wird wieder gemäß dem ersten Verfahrensschritt (S1) geprüft, ob der momentane Betrieb der Brennkraftmaschine eine erneute Anreicherung des Abgases mittels innermotorischer Maßnahmen zulässt, um die Reinigung des Speicherkatalysators fortzusetzen. Wird dies verneint, ist die Situation der im Abgassystem vorhandenen Wärme erneut zu überprüfen bzw. zu überwachen (S7).

Ist hingegen nicht mehr genügend Wärme im Abgassystem vorhanden d.h. ist es ausgeschlossen, dass der Vier-Wege-Katalysator die vorgegebene Grenztemperatur T_{Grenz} ohne Einleitung weiterer Maßnahmen erreicht, wird mit der Erwärmung des Abgassystems, beispielsweise des zusätzlichen Oxidationskatalysators, fortgefahren (S8).

### Bezugszeichen

- 1: kombiniertes Abgasnachbehandlungssystem, Vier-Wege-Katalysator
- 2: Abgasleitung
- 3: zusätzlicher Oxidationskatalysator
- 4: Oxidationskatalysator des Vier-Wege-Katalysators
- 5: Speicherkatalysator des Vier-Wege-Katalysators
- 6: Partikelfilter des Vier-Wege-Katalysators

- A: Temperatur im zusätzlichen Oxidationskatalysator
- B: Temperatur vor dem Vier-Wege-Katalysator
- C: Temperatur im Vier-Wege-Katalysator
- D: Temperatur hinter dem Vier-Wege-Katalysator
- E: Konzentration an HC am Auslass der Brennkraftmaschine
- F: Konzentration an HC zwischen dem zusätzlichen Oxidationskatalysator und dem Vier-Wege-Katalysator
- G: Konzentration an HC hinter dem Vier-Wege-Katalysator

- AGR: Abgasrückführung
- °C: Grad Celsius
- CO: Kohlenmonoxid
- deNOₓ: Reinigung des Speicherkatalysators
- deSoot: Regeneration des Partikelfilters
- deSOₓ: Desulfuration, Entschwefelung
- HC: unverbrannte Kohlenwasserstoffe
- NOₓ: Stickoxide
- LNT: Lean NOₓ Trap
- s: Sekunde als Einheit für die Zeitmessung
- SCR: Selective Catalytic Reduction
- SOₓ: Schwefeloxide
- T_{catalyst}: momentane Temperatur des Oxidationskatalysators
- T_{four-way}: Temperatur des Vier-Wege-Katalysators
- T_{Grenz}: vorgebbare Grenztemperatur für den Vier-Wege-Katalysator
- T_{threshold}: vorgegebene Temperatur für den Oxidationskatalysator

## Patentansprüche

1. Verfahren zum Betreiben einer Brennkraftmaschine mit mindestens einem Zylinder und mindestens einer Abgasleitung (2) zum Abführen der Abgase aus dem mindestens einen Zylinder, bei der ein kombiniertes Abgasnachbehandlungssystem (1) zur Nachbehandlung des Abgases in der mindestens einen Abgasleitung (2) vorgesehen ist; wobei das kombinierte Abgasnachbehandlungssystem (1) ein Vier-Wege-Katalysator (1) ist mit
■ einem Oxidationskatalysator (4), insbesondere zur Oxidation des im Abgas befindlichen Kohlerunonoxides (CO) und der unverbrannten Kohlenwasserstoffe (HC),
■ einem Speicherkatalysator (LNT) (5) zum Speichern und Reduzieren der im Abgas befindlichen Stickoxide (NOₓ), und
■ einem Partikelfilter (6) zum Sammeln und Verbrennen der im Abgas befindlichen Rußpartikel, und
■ stromaufwärts des Vier-Wege-Katalysators (1) ein zusätzlicher Oxidationskatalysator (3) in der mindestens einen Abgasleitung (2) vorgesehen ist,
**dadurch gekennzeichnet, dass** zum Reduzieren der im Speicherkatalysator (LNT) (5) gespeicherten Stickoxide d. h. zur Reinigung des Speicherkatalysators (5)
■ der zusätzliche Oxidationskatalysator (3) auf eine vorgebbare Temperatur T_{threshold} erwärmt wird, falls die momentane Temperatur T_{catalyst} des Oxidationskatalysators (3) kleiner ist als die vorgegebene Temperatur T_{threshold} d. h. T_{catalyst} < T_{threshold}, und anschließend
■ das Abgas für eine vorgebbare Zeitspanne mittels innermotorischer Maßnahmen mit Reduktionsmitteln zum Reduzieren der im Speicherkatalysator (LNT) (5) gespeicherten Stickoxide angereichert wird, wobei
■ diese Reduzierung vor Beendigung der Reinigung des LNT (5) ausgesetzt wird, falls der momentane Betrieb der Brennkraftmaschine eine weitere Anreicherung des Abgases mittels innermotorischer Maßnahmen nicht zulässt, und
■ falls der momentane Betrieb der Brennkraftmaschine eine Anreicherung des Abgases mittels innermotorischer Maßnahmen wieder zulässt, die Anreicherung fortgesetzt wird, falls
- die momentane Temperatur T_{catalyst} des zusätzlichen Oxidationskatalysators (3) größer ist als die vorgegebene Temperatur T_{threshold} d. h. T_{catalyst >} T_{threshold} und/oder
- die momentane Temperatur des Vier-Wege-Katalysators (1) T_{four-way} oberhalb einer vorgebbaren Grenztemperatur T_{Grenz} liegt d. h. T_{four-way} > T_{Grenz}, oder
- der Vier-Wege-Katalysator (1) die vorgegebene Grenztemperatur T_{Grenz} ohne Einleitung weiterer Maßnahmen erreicht, wobei der Zeitpunkt der Anreicherung auf das Erreichen der erforderlichen Grenztemperatur des Vier-Wege-Katalysators (1) abgestimmt wird.

2. Verfahren nach Anspruch 1, **dadurch gekennzeichnet, dass** die Brennkraftmaschine zur Anreicherung des Abgases mit Reduktionsmitteln unterstöchiometrisch (λ < 1) d. h. fett betrieben wird.

3. Verfahren nach Anspruch 1 oder 2, **dadurch gekennzeichnet, dass** zur Anreicherung des Abgases mit Reduktionsmitteln Kraftstoff in den mindestens einen Zylinder nacheingespritzt wird, der zumindest teilweise unverbannt in die mindestens eine Abgasleitung (2) ausgeschoben wird.

4. Verfahren nach einem der vorherigen Ansprüche, **dadurch gekennzeichnet, dass** die Erwärmung des zusätzlichen Oxidationskatalysators (3) durch eine Erhöhung der Abgastemperatur realisiert wird, wobei die Erhöhung der Abgastemperatur durch innermotorische Maßnahmen erzielt wird.

5. Verfahren nach Anspruch 4, **dadurch gekennzeichnet, dass** die Erhöhung der Abgastemperatur durch mindestens eine Nacheinspritzung von Kraftstoff in den mindestens einen Zylinder realisiert wird, wobei der nacheingespritzte Kraftstoff verbrannt wird.

6. Verfahren nach Anspruch 4 oder 5, **dadurch gekennzeichnet, dass** die Erhöhung der Abgastemperatur durch eine Rückführung von Abgas (AGR) realisiert wird.

7. Verfahren nach einem der Ansprüche 4 bis 6 zum Betreiben eines Dieselmotors, **dadurch gekennzeichnet, dass** die Erhöhung der Abgastemperatur durch eine verstärkte Drosselung im Ansaugtrakt des Dieselmotors realisiert wird.

8. Verfahren nach einem der Ansprüche 4 bis 7, **dadurch gekennzeichnet, dass** die Erhöhung der Abgastemperatur durch Absenkung des Luftverhältnisses λ bei magerem d.h. überstöchiometrischem Betrieb (λ > 1) der Brennkraftmaschine realisiert wird.

9. Verfahren nach einem der Ansprüche 4 bis 8, **dadurch gekennzeichnet, dass** die Erhöhung der Abgastemperatur dadurch realisiert wird, dass Kraftstoff in die mindestens eine Abgasleitung (2) stromaufwärts des zusätzlichen Oxidationskatalysators (3) eingebracht und oxidiert wird.

10. Verfahren nach einem der vorherigen Ansprüche, **dadurch gekennzeichnet, dass** die Anreicherung des Abgases mit Reduktionsmitteln intermittierend vorgenommen wird.

11. Verfahren nach Anspruch 10, **dadurch gekennzeichnet, dass** zur intermittierenden Anreicherung des Abgases mit Reduktionsmitteln die Brennkraftmaschine abwechselnd unterstöchiometrisch (λ < 1) d. h. fett und überstöchiometrisch (λ > 1) d. h. mager betrieben wird, so dass die sauerstoffarmen fetten Betriebsphasen der Brennkraftmaschine jeweils von einer sauerstoffreichen mageren Betriebsphase unterbrochen werden.

12. Verfahren nach Anspruch 11, **dadurch gekennzeichnet, dass** die sauerstoffarmen fetten Betriebsphasen der Brennkraftmaschine weniger als 8 Sekunden dauern.

## Claims

1. Method for operating an internal combustion engine having at least one cylinder and at least one exhaust line (2) for discharging the exhaust gases out of the at least one cylinder, in which internal combustion engine a combined exhaust-gas aftertreatment system (1) for the aftertreatment of the exhaust gas is provided in the at least one exhaust line (2), with the combined exhaust-gas aftertreatment system (1) being a four-way catalytic converter (1), having
• an oxidation catalytic converter (4), in particular for the oxidation of the carbon monoxide (CO) in the exhaust gas and the unburned hydrocarbons (HC),
• a storage catalytic converter (LNT) (5) for storing and reducing the nitrogen oxides (NOₓ) in the exhaust gas,
• a particle filter (6) for collecting and burning the soot particles in the exhaust gas, and
• with an additional oxidation catalytic converter (3) being provided in the at least one exhaust line (2) upstream of the four-way catalytic converter (1),
**characterized in that**, to reduce the nitrogen oxides stored in the storage catalytic converter (LNT) (5), that is to say to purify the storage catalytic converter (5),
• the additional oxidation catalytic converter (3) is heated to a predefinable temperature T_{threshold} if the present temperature T_{catalyst} of the oxidation catalytic converter (3) is lower than the predefined temperature T_{threshold}, that is to say T_{catalyst} < T_{threshold}, and subsequently,
• the exhaust gas is enriched with reducing agents for reducing the nitrogen oxides stored in the storage catalytic converter (LNT) (5) for a predefinable time period by means of engine-internal measures,
• said reduction being discontinued before the end of the purification of the LNT (5) if the present operation of the internal combustion engine does not permit further enrichment of the exhaust gas by means of engine-internal measures, and
• if the present operation of the internal combustion engine once again permits an enrichment of the exhaust gas by means of engine-internal measures, the enrichment being continued if
- the present temperature T_{catalyst} of the additional oxidation catalytic converter (3) is greater than the predefined temperature T_{threshold}, that is to say T_{catalyst} > T_{threshold}, and/or
- the present temperature of the four-way catalytic converter (1) T_{four-way} is greater than a predefinable limit temperature T_{Grenz}, that is to say T_{four-way} > T_{Grenz}, Or
- the four-way catalytic converter (1) reaches the predefined limit temperature T_{Grenz} without the initiation of further measures, with the time of the enrichment being adapted to the attainment of the required limit temperature of the four-way catalytic converter (1).

2. Method according to Claim 1, **characterized in that** the internal combustion engine is operated substoichiometrically (λ < 1), that is to say rich, in order to enrich the exhaust gas with reducing agents.

3. Method according to Claim 1 or 2, **characterized in that** fuel is post-injected into the at least one cylinder, which fuel is discharged, at least partially unburnt, into the at least one exhaust line (2) in order to enrich the exhaust gas with reducing agents.

4. Method according to one of the preceding claims, **characterized in that** the heating of the additional oxidation catalytic converter (3) is realized by means of an increase in the exhaust-gas temperature, with the increase in the exhaust-gas temperature being obtained by means of engine-internal measures.

5. Method according to Claim 4, **characterized in that** the increase in the exhaust-gas temperature is realized by means of at least one post-injection of fuel into the at least one cylinder, with the post-injected fuel being burnt.

6. Method according to Claim 4 or 5, **characterized in that** the increase in the exhaust-gas temperature is realized by means of a recirculation of exhaust gas (EGR).

7. Method according to one of Claims 4 to 6 for operating a diesel engine, **characterized in that** the increase in the exhaust-gas temperature is realized by means of an intensified throttling action in the intake tract of the diesel engine.

8. Method according to one of Claims 4 to 7, **characterized in that** the increase in the exhaust-gas temperature is realized by means of a reduction of the air ratio λ under lean, that is to say superstoichiometric, operation (λ > 1) of the internal combustion engine.

9. Method according to one of Claims 4 to 8, **characterized in that** the increase in the exhaust-gas temperature is realized **in that** fuel is introduced into, and oxidized in, the at least one exhaust line (2) upstream of the additional oxidation catalytic converter (3).

10. Method according to one of the preceding claims, **characterized in that** the enrichment of the exhaust gas with reducing agents is carried out intermittently.

11. Method according to Claim 10, **characterized in that**, for the intermittent enrichment of the exhaust gas with reducing agents, the internal combustion engine is operated alternately substoichiometrically (λ < 1), that is to say rich, and superstoichiometrically (λ > 1), that is to say lean, such that the low-oxygen rich operating phases of the internal combustion engine are in each case interrupted by an oxygen-rich lean operating phase.

12. Method according to Claim 11, **characterized in that** the low-oxygen rich operating phases of the internal combustion engine last less than 8 seconds.

## Revendications

1. Procédé pour faire fonctionner un moteur à combustion interne, comprenant au moins un cylindre et au moins une conduite de gaz d'échappement (2) pour évacuer les gaz d'échappement hors de l'au moins un cylindre, un système de post-traitement de gaz d'échappement combiné (1) pour le post-traitement des gaz d'échappement étant prévu dans l'au moins une conduite de gaz d'échappement (2), le système de post-traitement de gaz d'échappement combiné (1) étant un catalyseur à quatre voies (1), avec
- un catalyseur d'oxydation (4), en particulier pour l'oxydation du monoxyde de carbone (CO) se trouvant dans le gaz d'échappement et des hydrocarbures non brûlés (HC),
- un catalyseur d'accumulation (LNT) (5) pour accumuler et réduire les oxydes d'azote (NOₓ) se trouvant dans le gaz d'échappement et
- un filtre à particules (6) pour recueillir et brûler les particules de suie se trouvant dans le gaz d'échappement, et
- en amont du catalyseur à quatre voies (1), un catalyseur d'oxydation supplémentaire (3) dans l'au moins une conduite de gaz d'échappement (2),
**caractérisé en ce que**, pour réduire les oxydes d'azote accumulés dans le catalyseur d'accumulation (LNT) (5) c'est-à-dire pour nettoyer le catalyseur d'accumulation (5),
- le catalyseur d'oxydation supplémentaire (3) est chauffé à une température prédéfinissable T_{threshold} si la température instantanée T_{catalyst} du catalyseur d'oxydation (3) est inférieure à la température prédéfinie T_{threshold}, C' est-à-dire si T_{catalyst} < T_{threshold}, et ensuite
- le gaz d'échappement est enrichi pendant un intervalle de temps prédéfinissable au moyen de mesures internes au moteur, avec des agents réducteurs pour réduire les oxydes d'azote (NOₓ) accumulés dans le catalyseur d'accumulation (LNT) (5),
- cette réduction étant interrompue avant la fin du traitement de nettoyage du LNT (5), si le fonctionnement actuel du moteur à combustion interne n'autorise pas un nouvel enrichissement des gaz d'échappement au moyen de mesures internes au moteur et
- si le fonctionnement actuel du moteur à combustion interne autorise à nouveau un enrichissement des gaz d'échappement au moyen de mesures internes au moteur, l'enrichissement est poursuivi, si :
- la température instantanée T_{catalyst} du catalyseur d'oxydation supplémentaire (3) est supérieure à la température prédéfinie T_{threshold}, c'est-à-dire si T_{catalyst} > T_{threshold}, et/ou
- la température instantanée du catalyseur à quatre voies (1) T_{four-way} se situe au-dessus d'une température limite prédéfinissable T_{Grenz}, c'est-à-dire T_{four-way} > T_{Grenz}, ou
- le catalyseur à quatre voies (1) atteint la température limite prédéfinie T_{Grenz} sans introduire de mesures supplémentaires, l'instant de l'enrichissement étant adapté à l'obtention de la température limite requise du catalyseur à quatre voies (1).

2. Procédé selon la revendication 1, **caractérisé en ce que** le moteur à combustion interne fonctionne en mode sous-stoechiométrique (λ < 1), c'est-à-dire avec un mélange riche, pour l'enrichissement des gaz d'échappement avec des agents réducteurs.

3. Procédé selon la revendication 1 ou 2, **caractérisé en ce que** pour l'enrichissement des gaz d'échappement avec des agents réducteurs, on post-injecte dans l'au moins un cylindre du carburant qui est expulsé sous forme au moins en partie non brûlée dans l'au moins une conduite de gaz d'échappement (2).

4. Procédé selon l'une quelconque des revendications précédentes, **caractérisé en ce que** le chauffage du catalyseur d'oxydation supplémentaire (3) est réalisé par une augmentation de la température des gaz d'échappement, l'augmentation de la température des gaz d'échappement étant obtenue par des mesures internes au moteur.

5. Procédé selon la revendication 4, **caractérisé en ce que** l'augmentation de la température des gaz d'échappement est réalisée par au moins une post-injection de carburant dans l'au moins un cylindre, le carburant post-injecté étant brûlé.

6. Procédé selon la revendication 4 ou 5, **caractérisé en ce que** l'augmentation de la température des gaz d'échappement est réalisée par une recirculation des gaz d'échappement (AGR).

7. Procédé selon l'une quelconque des revendications 4 à 6, pour faire fonctionner un moteur diesel,
**caractérisé en ce que** l'augmentation de la température des gaz d'échappement est réalisée par un étranglement accru dans la voie d'admission du moteur diesel.

8. Procédé selon l'une quelconque des revendications 4 à 7, **caractérisé en ce que** l'augmentation de la température des gaz d'échappement est réalisée par réduction du rapport d'air λ dans le cas d'un mode de fonctionnement pauvre, c'est-à-dire sur-stoechiométrique (λ > 1) du moteur à combustion interne.

9. Procédé selon l'une quelconque des revendications 4 à 8, **caractérisé en ce que** l'augmentation de la température des gaz d'échappement est réalisée par le fait que du carburant est introduit dans l'au moins une conduite de gaz d'échappement (2) en amont du catalyseur d'oxydation supplémentaire (30 et est oxydé.

10. Procédé selon l'une quelconque des revendications précédentes, **caractérisé en ce que** l'enrichissement du gaz d'échappement avec des agents réducteurs est réalisé de manière intermittente.

11. Procédé selon la revendication 10, **caractérisé en ce que** pour l'enrichissement intermittent des gaz d'échappement avec des agents réducteurs, le moteur à combustion interne est utilisé en alternance en mode sous-stoechiométrique (λ < 1), c'est-à-dire avec un mélange riche, et sur-stoechiométrique (λ > 1), c'est-à-dire pauvre, de sorte que les phases de fonctionnement riches à oxygène réduit du moteur à combustion interne sont interrompues à chaque fois par une phase de fonctionnement pauvre riche en oxygène.

12. Procédé selon la revendication 11, **caractérisé en ce que** les phases de fonctionnement riches pauvres en oxygène du moteur à combustion interne durent moins de 8 secondes.
